# EUROPÄISCHE PATENTSCHRIFT

(11) **EP 3 293 407 B1**
(45) Veröffentlichungstag und Bekanntmachung des Hinweises auf die Patenterteilung: **20.11.2019**
(21) Anmeldenummer: 17190792.6
(22) Anmeldetag: 13.09.2017
(51) Int. Cl.: F16D 3/22, F16D 1/06, F16D 1/08, F16D 1/09, F16D 1/093

(54) **WELLE-NABE-VERBINDUNG**
SHAFT-TO-COLLAR CONNECTION
LIAISON ARBRE-MOYEU

(30) Priorität: 13.09.2016 DE 102016117218
(43) Veröffentlichungstag der Anmeldung: 14.03.2018
(73) Patentinhaber: Walzengießerei Coswig GmbH, 01640 Coswig (DE)
(72) Erfinder: Häfner, Hartmut, 01640 Coswig (DE); Baumgart, Sven, 01665 Diera-Zehren (DE); Noack, Tino, 01558 Großenhain (DE)
(74) Vertreter: Lippert Stachow Patentanwälte Rechtsanwälte Partnerschaft mbB

(56) Entgegenhaltungen:
- CH-A- 319 694
- DE-B- 1 188 890
- DE-B3-102012 216 459
- JP-A- S 622 026
- US-A- 3 279 831
- US-A- 3 528 691
- US-A- 3 729 953
- US-A- 5 536 105

## Beschreibung

Die Erfindung betrifft eine neuartige Welle-Nabe-Verbindung zur Aufnahme höchster Axialkräfte und Drehmomente, die gleichzeitig auf Kraft- und Formschluss beruht.

Welle-Nabe-Verbindungen sind im Maschinenbau zumeist standardisierte Verbindungsarten, um Drehmomente von einer Welle auf eine Nabe oder umgekehrt zu übertragen, oder/und Axialkräfte, Querkräfte und Biegemomente zu übertragen, welche an Nabenrädern, etwa an Zahnrädern (zum Beispiel durch Schrägverzahnungen) oder an Riemenscheiben oder dergleichen entstehen.

US 3 279 831 A beschreibt Traktorradbefestigungsmechanismen des Typs, bei dem die Traktionsräder zur Änderung der Spurweite einstellbar sind, mit einer Einrichtung zum festen Positionieren des Rades an einer beliebigen von mehreren vorgewählten axial angeordneten Stellen, die eine Keilverbindung aufweist, bei der der Wellenquerschnitt durch zwei Längsnuten gekerbt ist, in denen Keile angeordnet sind. Die Längsnuten schwächen den Querschnitt der Welle ganz erheblich und wirken bei Belastung durch ein Torsionsmoment extrem spannungserhöhend, so dass Ermüdungsrisse von genau diesen Nuten ausgehen.

US 5 536 105 A beschreibt eine Vorrichtung zum festen Befestigen eines Drehkörpers wie eines Zahnrads und einer Riemenscheibe an einer Drehwelle wie einer Motorwelle und einer Übertragungswelle, die einen Schlupf zwischen dem Drehkörper und der Drehwelle bereitstellt, wenn eine Überlastung des Drehkörpers auftritt. Ein Nutabschnitt ist entweder an der Innenfläche eines Befestigungslochs in der Mitte des Drehkörpers oder an der Außenfläche der Drehwelle ausgebildet, in der ein Paar von Keilelementen mit einer sich verjüngenden Kontaktfläche in Längsrichtung der Drehwelle angeordnet sind. Ein Klemmbolzen, der durch eines der Schlüsselelemente geht, wird in das andere Schlüsselelement geschraubt und an beide Schlüsselelemente gedrückt. Aufgrund des Drucks von dem Spannbolzen wird jedes Keilelement nach außen bewegt, wenn es durch die konische Fläche geführt wird. Die geeignete Fixierkraft, die durch die Keilelemente eingestellt wird, erlaubt den Schlupf zwischen dem Drehkörper und der Drehwelle, wenn die Überlastung unerwartet auftritt.

Zur Lösung der Aufgabe, ein Stirnradgetriebe mit einer Einrichtung zur gleichmäßigen Verteilung der Last über die Zahnbreite zu schaffen, schlägt DE 11 88 890 B vor, in der Innenfläche des Zahnkranzes und in der im Abstand zu dieser stehenden Außenfläche der Nabe oder Welle einander gegenüberstehend sich in Achsrichtung des Zahnrades erstreckende Ausnehmungen vorzusehen und in diesen quer zur Längserstreckung der Ausnehmung federnd nachgebende Körper unter Federvorspannung anzuordnen.

Aus CH 319 694 A ist eine auf Druck und Scherung beanspruchte Verbindung von Körpern mit gemeinsamer Rotationsachse bekannt, bei der die Verbindung bei jeder Drehrichtung sowohl tangential als auch radial und axial vollkommen spiellos ist, wobei die ringförmige Trennfuge der zu verbindenden Körper stellenweise durch Rotationsverbindungskörper unterbrochen wird, welche in korrespondierende Aussparungen der zu verbindenden Körper eingesetzt sind und radial federnde Elemente besitzen, die radial so verspannt sind, dass die Verbindungskörper den sie umschließenden Raum spiellos ausfüllen.

US 3 729 953 A beschreibt eine flexible Kupplung zum Verbinden der benachbarten Enden zweier Wellen, umfassend Naben, die drehfest an den benachbarten Enden der Wellen befestigt werden können, wobei die Naben radial beabstandete konzentrische Lagerelemente bereitstellen, die in Umfangsrichtung beabstandete, sich längs erstreckende gegenüberliegende Nuten enthalten, die zylindrische Aufnahmen bilden, in denen tonnenförmige Rollen angeordnet sind.

Welle-Nabe-Verbindungen können nach Art der Kraftübertragung unterteilt werden in (a) kraftschlüssige (reibschlüssige) Verbindungen, bei denen die Kraftübertragung zwischen Welle und Nabe durch Reibungswiderstand erfolgt, der durch Presspassungen oder Spannelemente wie zum Beispiel Klemmnaben oder Schrumpfscheiben erzeugt wird, (b) formschlüssige Verbindungen, bei denen die Kraftübertragung über eine bestimmte Formgebung, zum Beispiel Keilwellenprofil, Polygonprofil, Zahnwellenprofil und Kerbverzahnung oder zusätzliche Mitnehmerelemente, zum Beispiel Passfedern, erreicht wird, (c) vorgespannte formschlüssige Verbindungen, d.h. eine Kombination aus Kraft- und Formschluss, die beispielsweise durch Verwendung von Keilen, Koni usw. erzeugt werden kann, und stoffschlüssige Verbindungen, zum Beispiel Kleben, Löten oder Schweißen.

In Stahlwalzwerken wird, um die hohen Relativmomente zwischen Walzenkörper und Walzenwelle zu übertragen, der Walzenkörper üblicherweise auf die Walzenwelle aufgeschrumpft, d.h. kraftschlüssig verbunden. Durch das Aufschrumpfen werden im Walzenkörper extrem hohe Tangentialspannungen erzeugt, die im ungünstigsten Fall zur Zerstörung des Walzenkörpers führen können, wenn die betriebsbedingten Beanspruchungen durch das Walzen von Stahl hinzukommen. Außerdem sind solche Schrumpfverbindungen in aller Regel nicht zerstörungsfrei lösbar, um einen verschlissenen Walzenkörper auszutauschen. Dies führt dazu, dass der Walzenkörper mit hohem Aufwand an Energie und Arbeitszeit nachbearbeitet werden muss, wenn er weiter verwendet werden soll.

Ausgehend von diesem Stand der Technik stellt sich die Erfindung die Aufgabe, eine Welle-Nabe-Verbindung anzugeben, die höchste Belastungen in axialer und tangentialer Richtung aufnehmen kann, gleichzeitig einfach zu fügen und bedarfsweise zu lösen ist.

Diese Aufgabe wird gelöst durch eine Welle-Nabe-Verbindung mit den Merkmalen des unabhängigen Anspruchs 1. Vorteilhafte Ausgestaltungen und Weiterbildungen sind in den abhängigen Ansprüchen beschrieben.

Vorgeschlagen wird zunächst eine Welle-Nabe-Verbindung, bei der in einem zwischen axialen Endbereichen der Nabe liegenden mittleren Bereich die Nabe einen nach innen weisenden Absatz und die Welle einen nach außen weisenden Absatz aufweist, wobei jeder Absatz eine Anordnung von Vertiefungen aufweist dergestalt, dass je eine Vertiefung des Absatzes der Welle und eine Vertiefung des Absatzes der Nabe gemeinsam einen in einer Axialrichtung der Welle verlaufenden Hohlraum umschließen, und in den Hohlräumen Übertragungselemente angeordnet sind.

Unter einem Übertragungselement soll dabei ein in der Axialrichtung der Welle verlaufend angeordnetes Verbindungsmittel verstanden werden, das geeignet ist, ein Relativmoment zwischen Welle und Nabe zu übertragen, indem die einen Hohlraum bildenden Vertiefungen in den Absätzen von Welle und Nabe auf das Übertragungselement einwirken, so dass das Übertragungselement eine Relativverdrehung zwischen Welle und Nabe blockiert.

Unter einem nach innen weisenden Absatz in einem mittleren Bereich der Nabe soll dabei ein Bereich der Nabe verstanden werden, der einen geringeren Innendurchmesser aufweist als die Nabe ihn in ihren zuvor beschriebenen axialen Endbereichen aufweist. In gleicher Weise soll unter einem nach außen weisenden Absatz der Welle ein Bereich der Welle verstanden werden, der einen größeren Außendurchmesser aufweist als die Welle ihn in den axialen Endbereichen der Nabe aufweist.

Der nach innen weisende Absatz der Nabe und der nach außen weisende Absatz der Welle liegen einander gegenüber und ihre Durchmesser sind so gewählt, dass die Nabe ohne großen Axialkraftaufwand auf die Welle geschoben und so ausgerichtet werden kann, dass jeder Vertiefung in dem Absatz der Welle eine Vertiefung in dem Absatz der Nabe gegenüberliegt, so dass beide Vertiefungen zusammen einen axial verlaufenden Tunnel bilden. Dieser tunnelförmige Hohlraum ist zweckmäßig prismatisch ausgebildet, damit ein zweckmäßig ebenfalls prismatisches Übertragungselement, beispielsweise ein Bolzen, in axialer Richtung der Welle in diesen Hohlraum eingeschoben werden kann.

Die Übertragungselemente sind in ihrer äußeren Gestalt an die Hohlräume angepasst, so dass die Übertragungselemente durch Formschluss zwischen dem Übertragungselement und den beiden Vertiefungen der Absätze von Welle und Nabe, die den Hohlraum bilden, die Übertragung sehr großer Drehmomente zwischen Welle und Nabe ermöglichen.

Durch diese Lösung wird ein bezüglich einer Drehmomentenbelastung formschlüssiger Verbund zwischen Welle und Nabe erreicht, ohne dass die Welle und die Nabe direkt aufeinander einwirken, wie dies beispielsweise bei einem Keilwellenprofil mit einer korrespondierend gestalteten Nabe der Fall wäre. Es versteht sich von selbst, dass die axial verlaufenden Hohlräume und die Übertragungselemente verschiedene Gestaltungen, beispielsweise korrespondierende Polygonquerschnitte, aufweisen können. Zur Vermeidung unnötiger Kerbwirkungen ist es jedoch besonders vorteilhaft, wenn die axial verlaufenden Hohlräume und die Übertragungselemente Kreisquerschnitte aufweisen, die Übertragungselemente also zylindrisch sind.

Gemäß einer Ausgestaltung kann vorgesehen sein, dass die Welle und die Nabe miteinander zusammenwirkende Axialsicherungsmittel aufweisen, d.h. dass Welle und Nabe sich in der Axialrichtung gegenseitig blockieren. Solche zusammenwirkenden Axialsicherungsmittel können beispielsweise mindestens eine Nut und mindestens eine in die Nut eingreifende Noppe umfassen, wobei die mindestens eine Noppe durch eine Vertiefung hindurch axial zur Nut hin verschiebbar ist. Diese Axialsicherungsmittel wirken miteinander ähnlich wie die Elemente eines Bajonettverschlusses zusammen. Beispielsweise kann die Nabe in ihrer der Welle zugewandten Fläche, d.h. im Absatz der Nabe, eine umlaufende Nut aufweisen und die Welle auf ihrer der Nabe zugewandten Fläche, d. h. auf dem Absatz der Welle, eine oder mehrere Noppen aufweisen. Die Noppen werden beim Fügen der Welle-Nabe-Verbindung in axialer Richtung durch je eine Vertiefung der Nabe geführt, bis sie die umlaufende Nut der Nabe erreichen. Dann werden Welle und Nabe relativ zueinander verdreht, so dass die Noppen in der Nut verschoben werden, wodurch die Noppen nicht mehr durch eine Vertiefung der Nabe in axialer Richtung verschoben werden können, wodurch Welle und Nabe in axialer Richtung relativ zueinander fixiert sind.

Um eine besonders gute Übertragung von Drehmomenten zu erzielen, ist es dabei vorteilhaft, wenn mindestens ein Übertragungselement als Passbolzen ausgeführt ist, der bezüglich des zugehörigen Hohlraums eng toleriert ist, so dass das Übertragungselement spielfrei in dem Hohlraum sitzt.

Mindestens ein anderes Übertragungselement kann weiterhin so ausgeführt sein, dass es locker, d.h. mit Spiel, in dem zugehörigen Hohlraum sitzt. Ein solches Übertragungselement ist demzufolge als reiner Zugbolzen ausgebildet, d.h. es trägt zwar dazu bei, eine Axialkraft zwischen Welle und Nabe zu übertragen, kann aber, zumindest wenn gleichzeitig Passbolzen verwendet werden, kein Drehmoment übertragen. Diese Maßnahme kann getroffen werden, um die Fügbarkeit der Welle-Nabe-Verbindung zu verbessern, denn wenn alle Bolzen als Passbolzen ausgeführt sind, sind die Anforderungen an die Abstände der Hohlräume, in die die Bolzen eingesetzt werden, so hoch, dass der Fertigungsaufwand insgesamt sehr groß ist. Dies wird vermieden, wenn nicht jedes Übertragungselement ein Passbolzen ist.

Alternativ oder zusätzlich kann vorgesehen sein, dass mindestens ein Übertragungselement einen zweiteiligen Keilbolzen umfasst, bei dem die beiden Teile je eine Keilfläche aufweisen. Mit anderen Worten wird hierdurch ein Bolzen bereitgestellt, dessen beide Teile mit Spiel in den Hohlraum eingeführt und erst anschließend gegeneinander und gegen den Hohlraum, d.h. die beiden Vertiefungen von Welle und Nabe, verspannt werden.

Je höher die zu übertragenden Relativmomente zwischen Welle und Nabe sind, umso höher sollte die Zahl der Übertragungselemente gewählt werden, um die durch das Relativmoment in den Übertragungselementen erzeugten Scherspannungen auf möglichst viele Übertragungselemente zu verteilen.

In einer Weiterbildung kann vorgesehen sein, dass zumindest in gegenüberliegenden axialen Endbereichen der Nabe zwischen Welle und Nabe je ein Ringspalt gebildet ist und in jedem Ringspalt ein Haltering angeordnet ist.

Beispielsweise kann vorgesehen sein, dass die Halteringe aus Flachmaterial hergestellt und mit zumindest einem Teil der Übertragungselemente verbunden sind. Dazu können derartige, beispielsweise aus Blech gefertigte Halteringe an den Positionen der Übertragungselemente Bohrungen aufweisen, durch die die Übertragungselemente ragen oder in denen Schrauben angeordnet sind, die mit den Übertragungselementen verschraubt sind.

In einer anderen Ausgestaltung kann vorgesehen sein, dass jeder Haltering mindestens eine konische Kontaktfläche aufweist, die mit einer konischen Kontaktfläche der Welle oder mit einer konischen Kontaktfläche der Nabe oder mit konischen Kontaktflächen der Welle und der Nabe flächigen Kontakt hat, und die Halteringe durch zumindest einen Teil der Übertragungselemente gegeneinander, gegen die Welle und gegen die Nabe verspannt sind.

Mit anderen Worten wirken zumindest einige der Übertragungselemente mit den beiden Halteringen so zusammen, dass diese aufeinander zu gezogen werden, so dass die konischen Kontaktflächen der Halteringe mit der oder den jeweiligen konischen Kontaktflächen der Welle oder/und der Nabe in Kontakt gebracht und gegen diese verspannt werden. Im einfachsten Fall kann ein Übertragungselement im obigen Sinne eine Schraube oder ein Bolzen sein, die durch eine Bohrung des einen Halterings gesteckt und in eine Gewindebohrung des anderen Halterings eingeschraubt ist.

Unter einer Anordnung von Übertragungselementen soll dabei eine räumliche Konfiguration von zwei oder mehr Übertragungselementen verstanden werden, die die Halteringe möglichst gleichmäßig gegeneinander verspannen. Es versteht sich, dass dieses Ziel durch eine größere Anzahl von Übertragungselementen umso besser erzielt wird. So kann die Anordnung von Übertragungselementen prinzipiell eine beliebig große Anzahl von Übertragungselementen umfassen, so lange diese auf dem Umfang der Halteringe Platz finden und Bohrungen für die Übertragungselementen die Halteringe nicht zu sehr schwächen.

Je höher die zu übertragenden Axialkräfte sind, umso höher sollte die Zahl der Übertragungselemente gewählt werden, um eine möglichst homogene Flächenpressung der Halteringe auf die konische Kontaktfläche der Welle oder/und die konische Kontaktfläche der Nabe zu erzielen.

Weist nur die Nabe eine zu der konischen Kontaktfläche des Halterings korrespondierende konische Kontaktfläche auf, so wird der Haltering elastisch so verformt, dass sich sein Durchmesser verringert und er auf die Welle gepresst wird. Weist nur die Welle eine zu der konischen Kontaktfläche des Halterings korrespondierende konische Kontaktfläche auf, so wird der Haltering elastisch so verformt, dass sich sein Durchmesser vergrößert und er in die Nabe gepresst wird. Weisen sowohl die Welle als auch die Nabe mit konischen Kontaktflächen des Halterings korrespondierende konische Kontaktflächen auf, so wird der Haltering wie ein Keil in den sich von der Welle und von der Nabe her verjüngenden Ringspalt getrieben, wodurch der Haltering gleichmäßig gegen die Welle und gegen die Nabe verspannt wird.

Durch das Zusammenwirken der konischen Kontaktflächen von Welle oder/und Nabe einerseits und der Halteringe andererseits weist diese Verbindung sowohl Merkmale einer kraftschlüssigen als auch einer formschlüssigen Verbindung auf. Ihr großer Vorteil gegenüber einer aufgeschrumpften Nabe besteht darin, dass sie einfach gefügt und ebenso einfach wieder gelöst werden kann. Abhängig von der konkreten Gestaltung und Größe der konischen Kontaktfläche sind auch sehr hohe Axialkräfte zwischen Nabe und Welle übertragbar.

Die vorgeschlagene Welle-Nabe Verbindung eignet sich für jegliche Anordnung einer Nabe auf einer die Nabe tragenden Welle, auch für solche Welle-Nabe-Verbindungen, die sehr hohen Belastungen ausgesetzt sind. Mit großem Vorteil kann die vorgeschlagene Welle-Nabe-Verbindung beispielsweise in Walzwerken dafür genutzt werden, den eigentlichen Walzenkörper auf einer den Walzenkörper tragenden Welle zu befestigen. Andere Anwendungsfälle sind beispielsweise die Anordnung eines Generatorläufers auf einer Generatorwelle, beispielsweise in Windkraftanlagen, eines Motorläufers auf der Motorwelle, aber auch von Radnaben auf Achswellen usw.

Gemäß einer weiteren Ausgestaltung kann vorgesehen sein, dass die Halteringe aus zwei oder mehr Ringsegmenten bestehen. Dadurch wird einerseits der Fertigungsaufwand bei Welle-Nabe-Verbindungen mit sehr großen Durchmessern gering gehalten und andererseits muss der Haltering damit seinen Durchmesser beim Verspannen nicht ändern, sondern nur die kleineren Ringsegmente passen sich elastisch an den Ringspalt an.

Zweckmäßig umfassen die Bolzen jeweils mindestens eine Schraube. Diese dienen dazu, die Halteringe gegeneinander zu verspannen, aber auch dazu, die Passbolzen, Zugbolzen, Keilbolzen usw.in ihrer jeweiligen Position zu halten. Bei Keilbolzen bewirkt eine Schraube außerdem die Keilwirkung zwischen den beiden Teilen des Keilbolzens, die dazu führt, dass der Keilbolzen sich in dem Hohlraum verspannt und so durch Formschluss zur Drehmomentenübertragung zwischen Welle und Nabe beiträgt.

Um das Fügen der vorgeschlagenen Welle-Nabe-Verbindung zu erleichtern, ist in einer weiteren Ausgestaltung vorgesehen, dass mindestens ein Haltering an seiner dem anderen Haltering zugewandten Seite Arretierungsmittel zur drehfesten Arretierung mindestens eines Bolzens aufweist. Dadurch wird einerseits der Bolzen relativ zum Haltering oder Ringsegment definiert positioniert, andererseits kann der Bolzen damit selbst Drehmomente aufnehmen, was von Vorteil ist, wenn beispielsweise von dem gegenüberliegenden Haltering her eine Schraube in den Bolzen eingeschraubt werden muss, um die beiden Halteringe gegeneinander zu verspannen. Das Arretierungsmittel dient damit als Verdrehsicherung und Montagehilfe für das Fügen der Welle-Nabe-Verbindung.

Konkret kann die drehfeste Arretierung des Bolzens gegenüber dem Haltering oder Ringsegment beispielsweise dadurch erreicht werden, dass das Arretierungsmittel eine Nut in dem Haltering oder Ringsegment umfasst und ein dem Haltering oder Ringsegment zugewandtes Ende des mindestens einen Bolzens so geformt ist, dass es in die Nut einsetzbar ist.

Dabei kann weiterhin vorteilhaft vorgesehen sein, dass die Nut schräge Nutflanken aufweist und das dem Haltering zugewandte Ende des mindestens einen Bolzens keilförmige Kontaktflächen aufweist. Durch die schrägen Nutflanken und die ebenfalls schrägen Kontaktflächen des Bolzens kann erreicht werden, dass der Bolzen sich in der Nut selbst zentriert und dadurch mit hoher Präzision positioniert ist.

Nachfolgend wird die Erfindung anhand zweier Ausführungsbeispiele und zugehöriger Zeichnungen näher erläutert. Darin zeigen
Fig. 1-3 eine Welle-Nabe-Verbindung gemäß einem ersten Ausführungsbeispiel im gefügten Zustand,

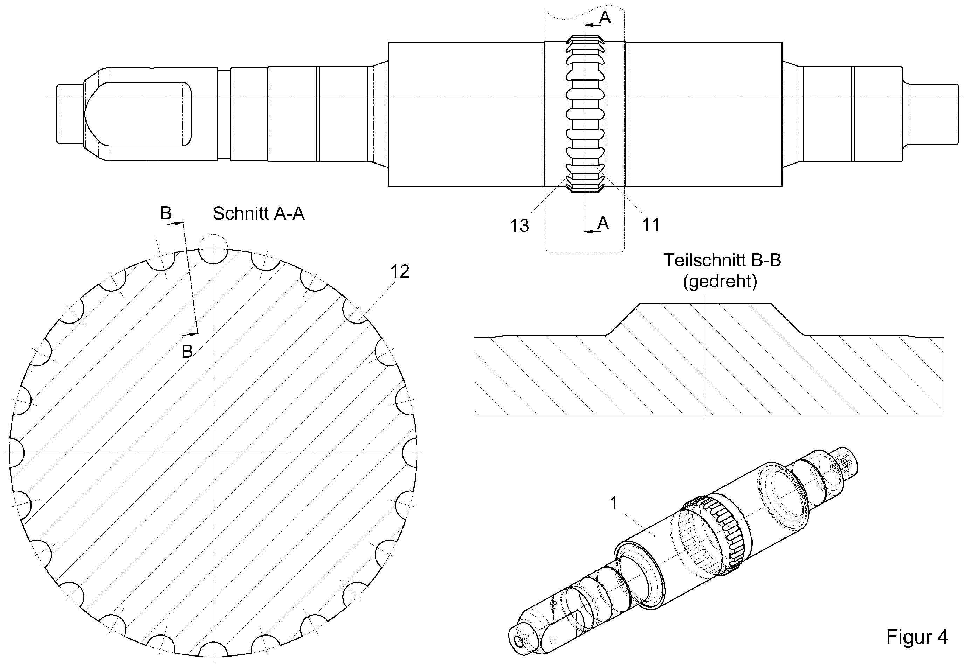

Fig. 4 die Welle,

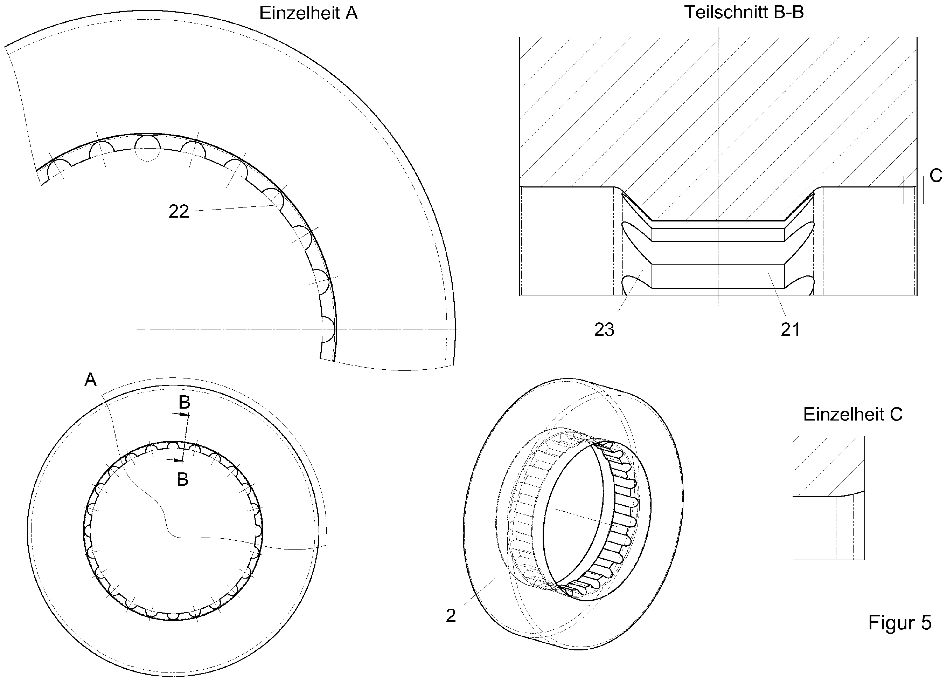

Fig. 5 die Nabe,
Fig. 6-7 die Halteringe,
Fig. 8-a einen Passbolzen,

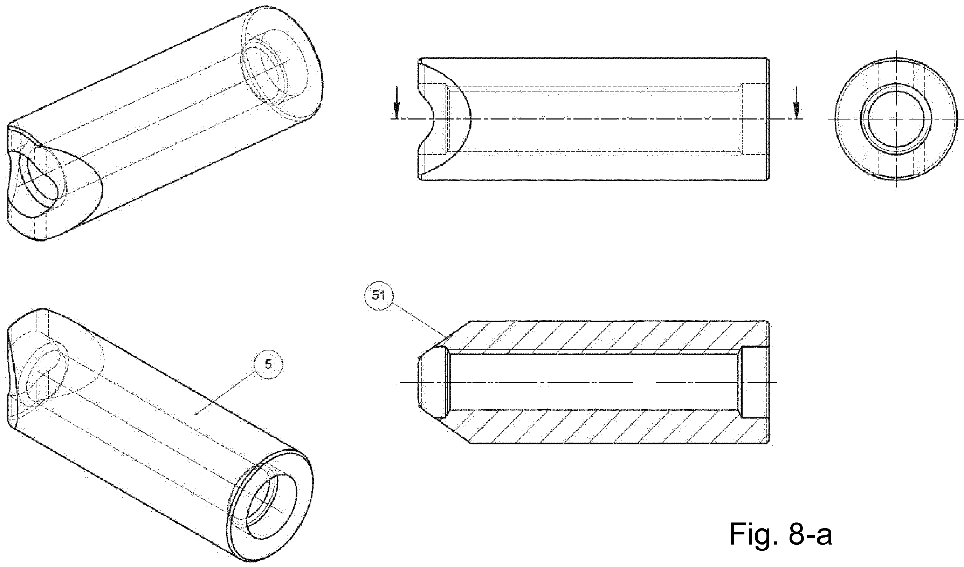

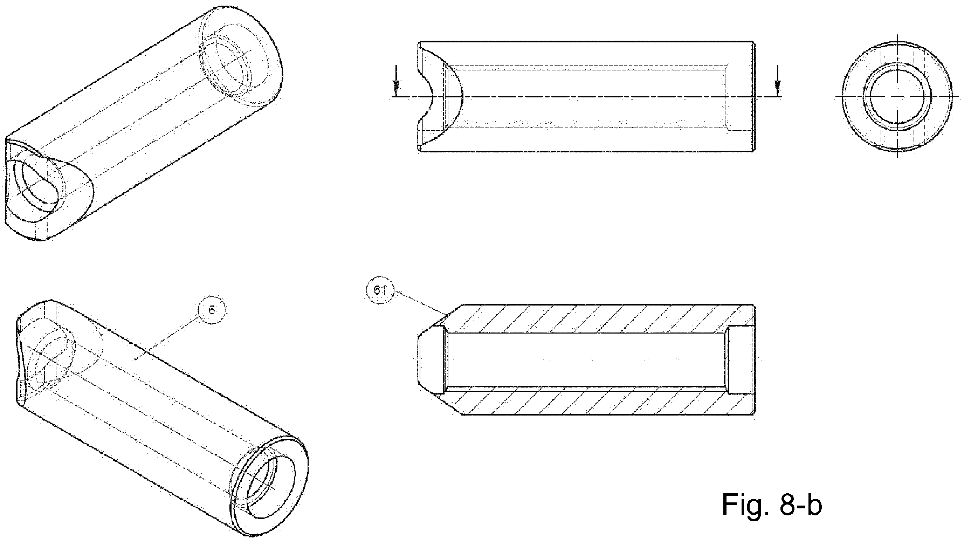

Fig. 8-b einen Zugbolzen,

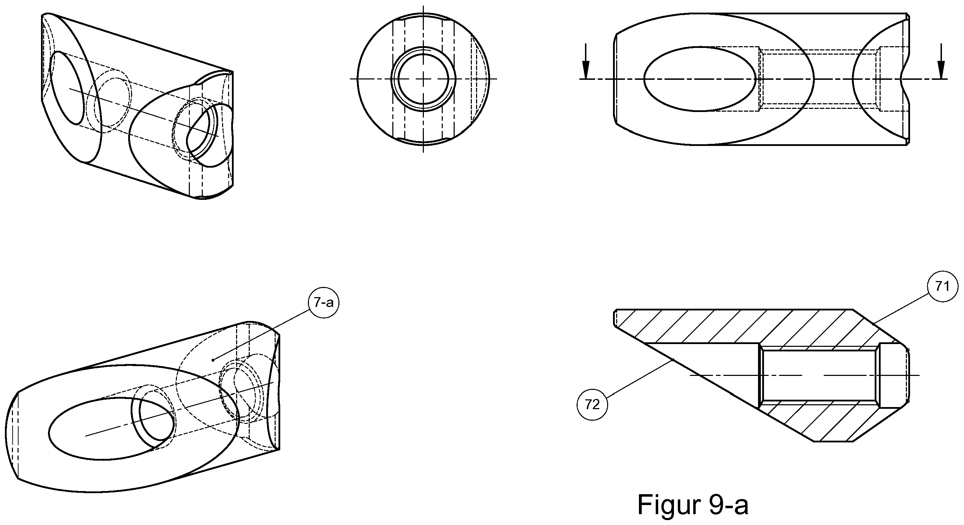

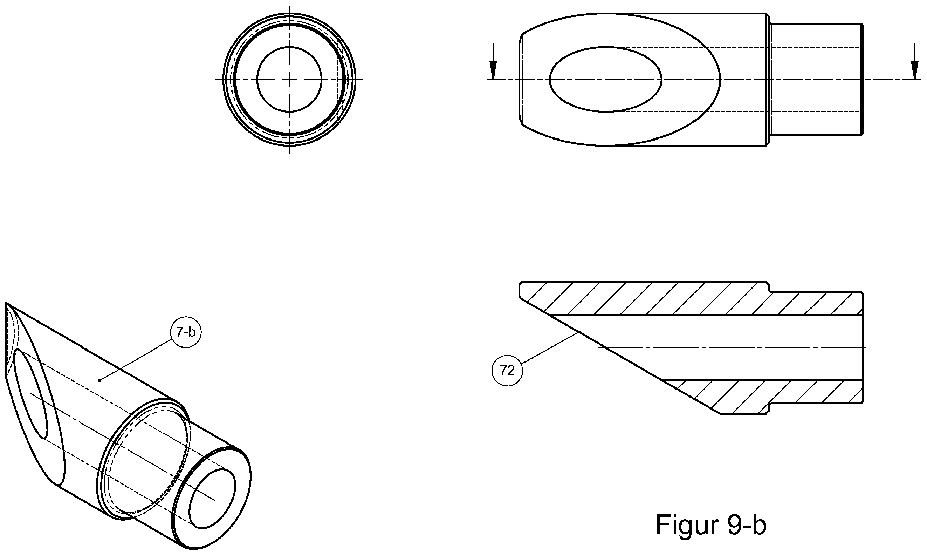

Fig. 9-a einen Gewindekeil eines Keilbolzens,
Fig. 9-b einen Lochkeil eines Keilbolzens,

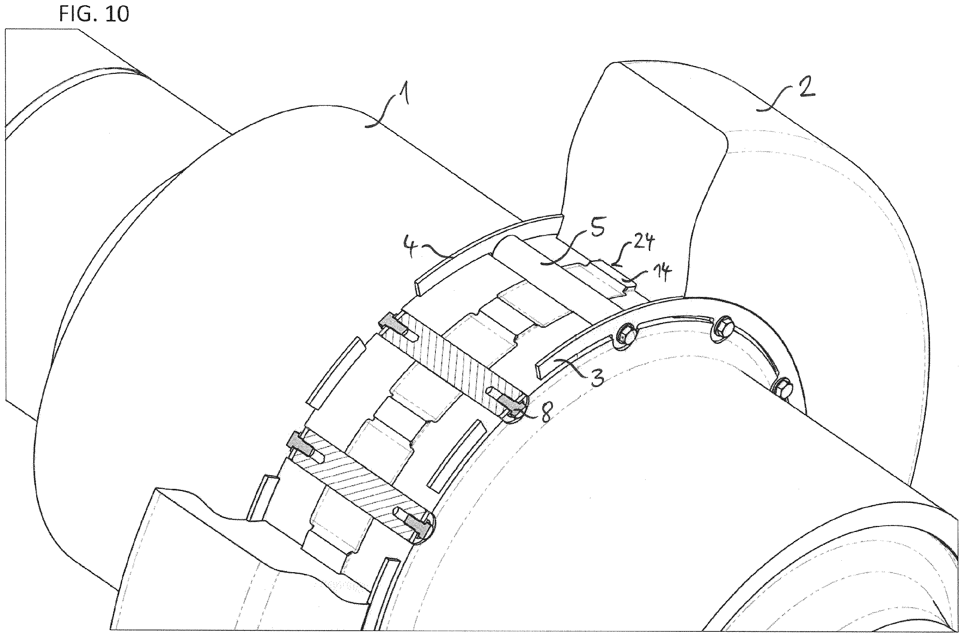

Fig. 10 eine Welle-Nabe-Verbindung gemäß einem zweiten Ausführungsbeispiel im gefügten Zustand,

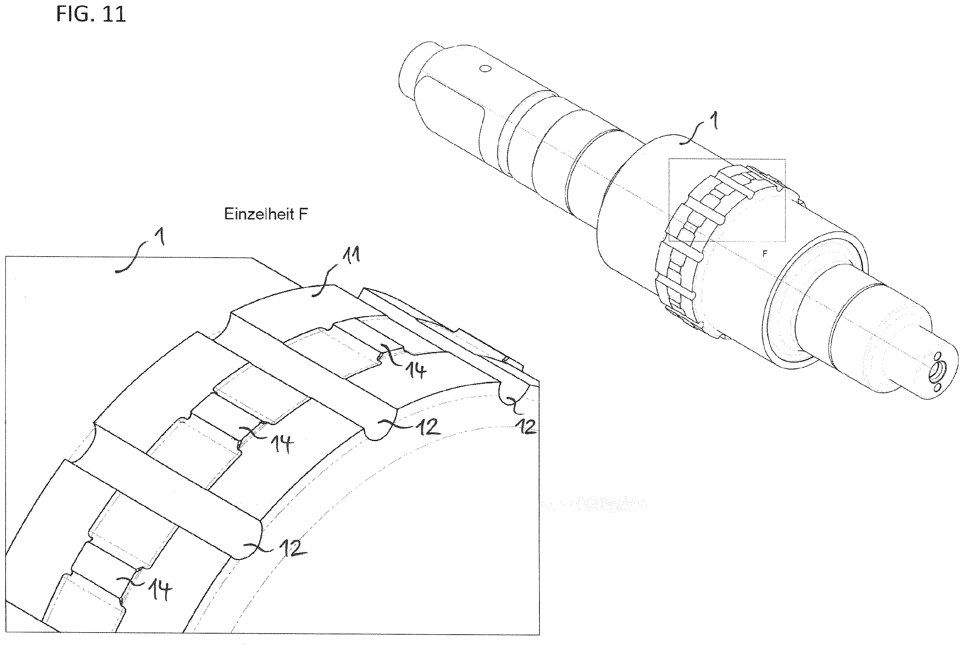

Fig. 11 die Welle,

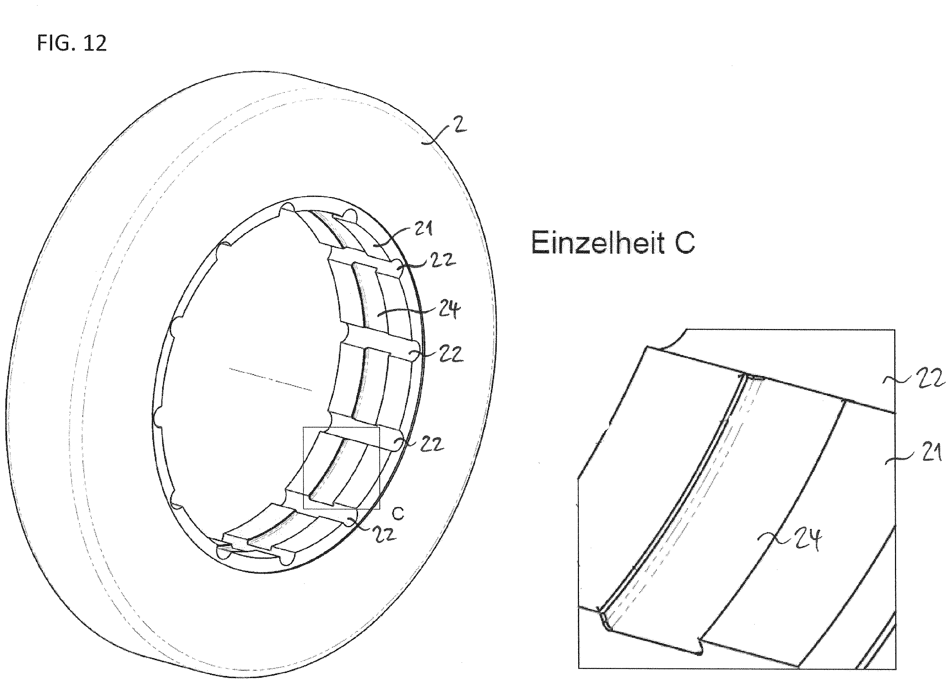

Fig. 12 die Nabe,

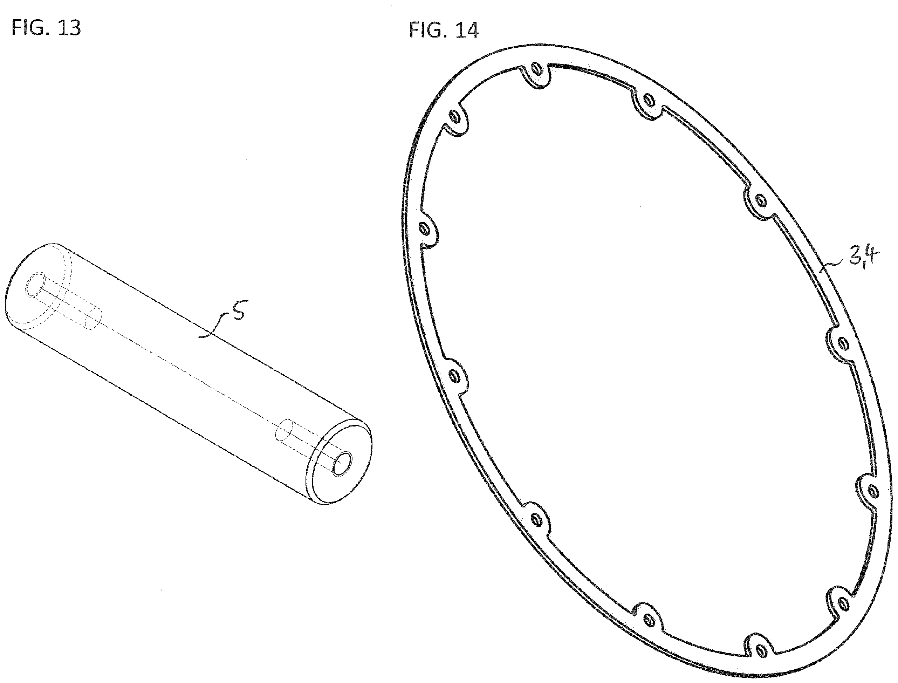

Fig. 13 einen Passbolzen,
Fig. 14 einen Haltering.

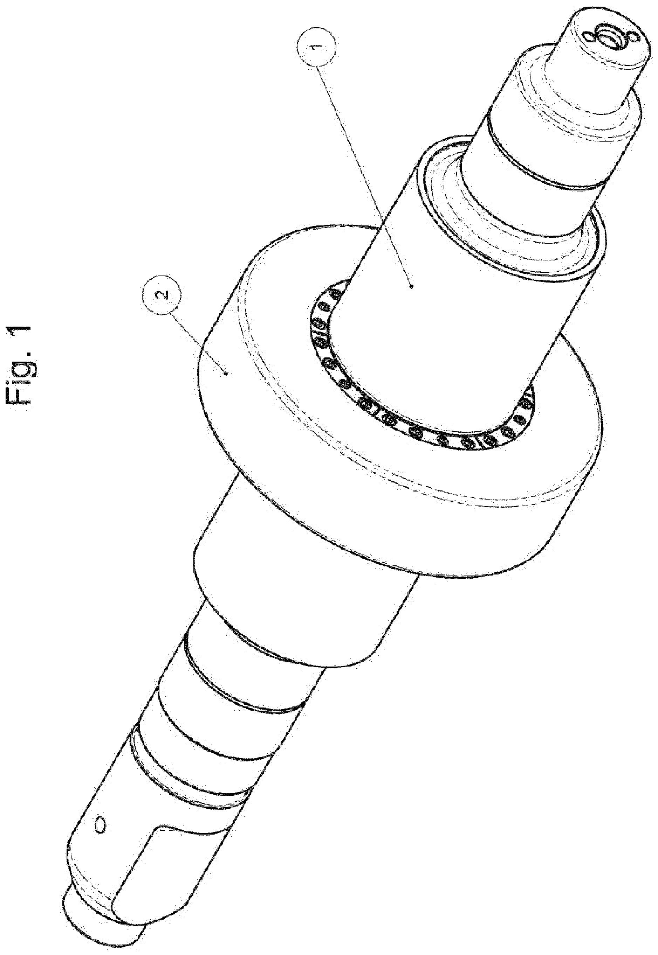

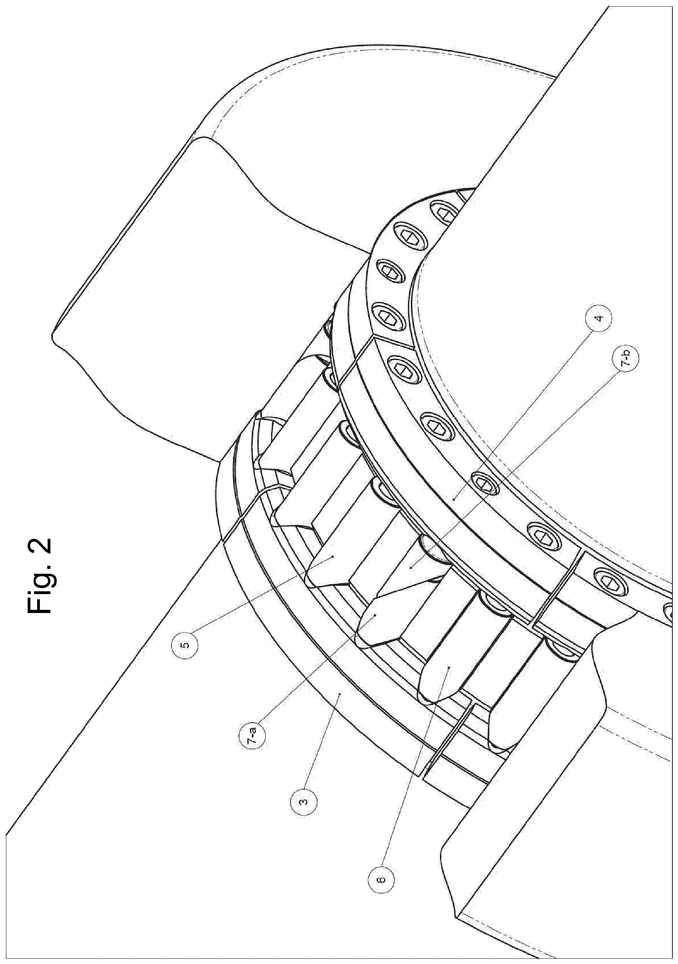

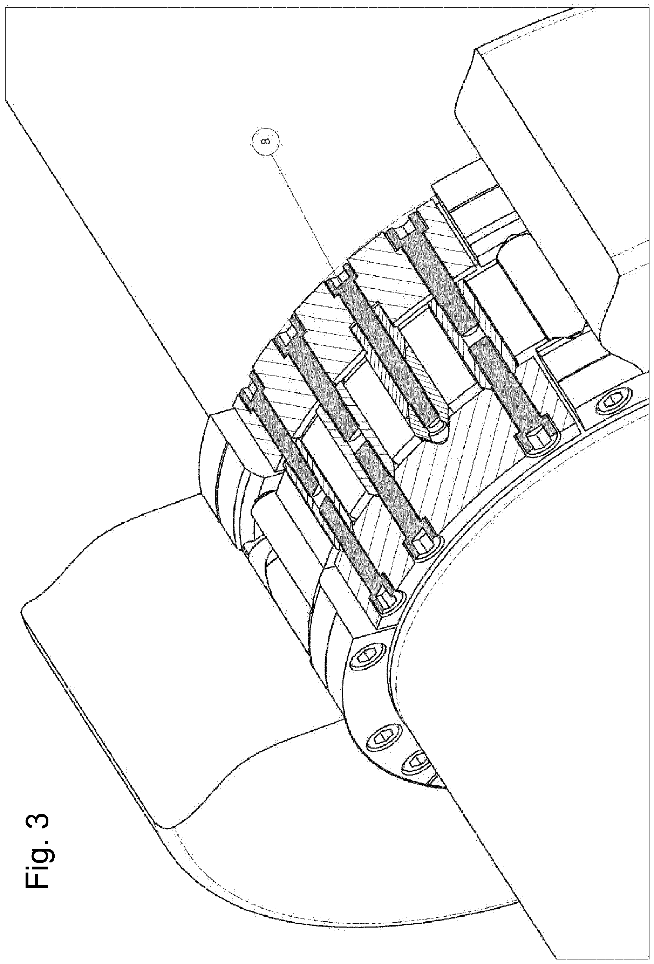

In Fig. 1 ist eine Gesamtansicht der Welle-Nabe-Verbindung gemäß erstem Ausführungsbeispiel dargestellt, und Fig. 2 und 3 zeigen unterschiedliche Schnittdarstellungen der Welle-Nabe-Verbindung im gefügten Zustand.

Die Nabe 2 im Ausführungsbeispiel hat in der axialen Richtung der Welle 1 eine vergleichsweise geringe Ausdehnung. Es kann sich dabei beispielsweise um den Walzenkörper einer Profilwalze für ein Stahlwalzwerk handeln, wobei das Profil hier nicht dargestellt ist.

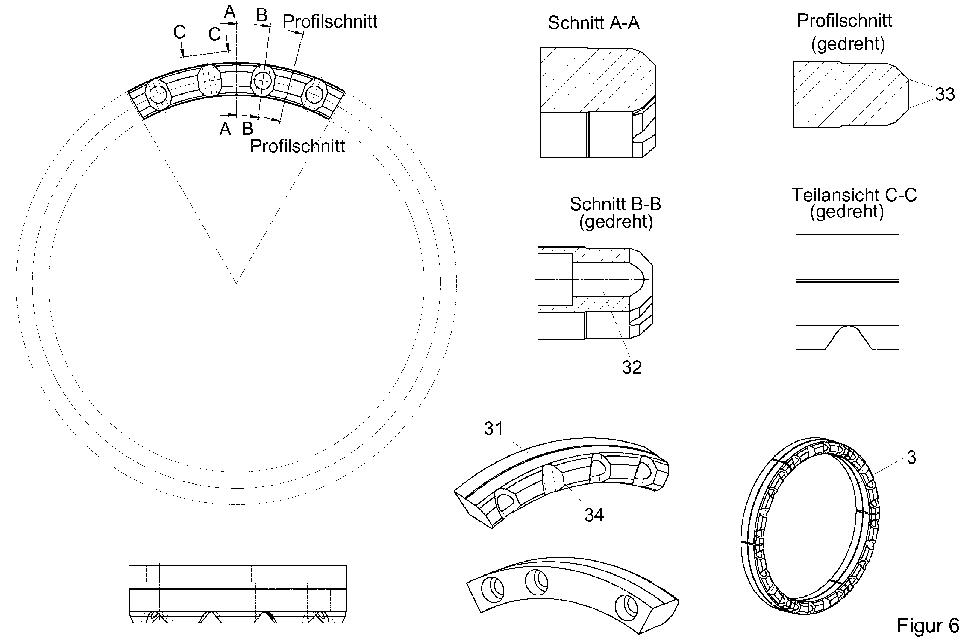

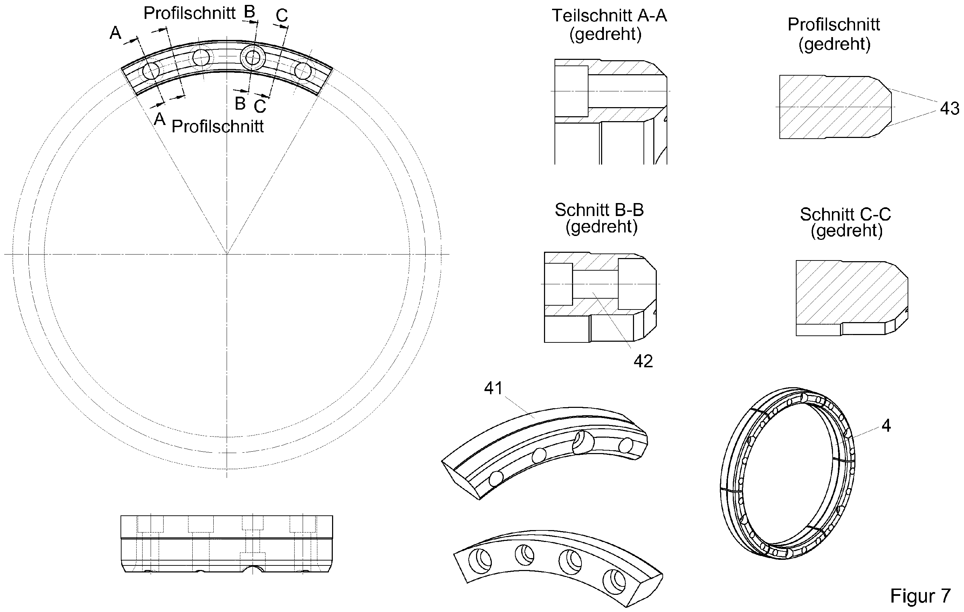

Von beiden axialen Enden der Nabe 2 her, d.h. in gegenüberliegenden axialen Endbereichen der Nabe 2, ist zwischen Welle 1 und Nabe 2 je ein Ringspalt gebildet. In jedem dieser beiden Ringspalte ist ein Haltering 3,4, angeordnet, der im Ausführungsbeispiel aus jeweils sechs Ringsegmenten 31,41 zusammengesetzt ist, die in Fig. 6 und 7 dargestellt sind. Jedes Ringsegment 31,41 weist vier Bohrungen 32,42 zur Aufnahme von Übertragungselementen 5,6,7 auf.

Die beiden Halteringe 3,4 weisen jeweils eine der Welle 1 zugewandte konische Kontaktfläche 33,43 und eine der Nabe 2 zugewandte konische Kontaktfläche 33,43 auf, die mit einer konischen Kontaktfläche 13 der Welle 1 bzw. mit einer konischen Kontaktfläche 23 der Nabe 2 flächigen Kontakt haben. Die Halteringe 3,4 sind durch eine Anordnung von Übertragungselementen 5,6,7, die durch Schrauben 8 gehalten sind, gegeneinander, gegen die Welle 1 und gegen die Nabe 2 verspannt.

Die Nabe 2 weist einen nach innen weisenden Absatz 21 und die Welle 1 einen nach außen weisenden Absatz 11 auf. Jeder Absatz 11,21 weist eine Anordnung von Vertiefungen 12,22 auf. Im Ausführungsbeispiel sind die Vertiefungen 12,22 beider Absätze 11,21 jeweils um 15° zueinander versetzt, d.h. es gibt insgesamt jeweils 24 Vertiefungen 12,22, so dass eine Vertiefung 12 des Absatzes 11 der Welle 1 und eine Vertiefung 22 des Absatzes 21 der Nabe 2 gemeinsam einen in einer Axialrichtung der Welle 1 verlaufenden Hohlraum umschließen. In jedem dieser Hohlräume ist eines der Übertragungselemente 5,6,7 angeordnet.

In jedem Ringsegment 31,41 ist eines der vier Übertragungselemente 5,6,7 als Passbolzen 5 ausgeführt, dessen Außendurchmesser spielfrei in dem Hohlraum sitzt. Ein solcher Passbolzen 5 ist beispielhaft in Fig. 8-a dargestellt. Zwei andere Übertragungselemente 5,6,7 in jedem Ringsegment 31,41 sind als Zugbolzen 6 ausgeführt, d.h. sie sitzen mit Spiel in dem jeweiligen Hohlraum zwischen Welle 1 und Nabe 2. Die beispielhaft in Fig. 8-b dargestellten Zugbolzen 6 sind von prinzipiell gleicher Gestaltung wie die in Fig. 8-a dargestellten Passbolzen 5, mit dem einzigen Unterschied bei der Wahl des Außendurchmessers, wie oben erläutert.

Das vierte Übertragungselement 5,6,7 in jedem Ringsegment 31,41 ist ein Keilbolzen 7, der aus zwei Teilen besteht, nämlich einem Gewindekeil 7-a (mit einer Durchgangsbohrung mit einem Innengewinde) und einem Lochkeil 7-b (mit einer Durchgangsbohrung ohne Innengewinde) die beispielhaft in Fig. 9-a und 9-b gezeigt sind, wobei die beiden Teile je eine Keilfläche 72 aufweisen. Dadurch, dass ein Teil des Keilbolzens 7 eine Durchgangsbohrung aufweist und der andere Teil des Keilbolzens 7 ein Innengewinde aufweist, können die beiden Teile 7-a und 7-b des Keilbolzens 7 durch eine Schraube 8, die von einem Haltering 4 her durch den Lochkeil 7-b hindurch in das Innengewinde des Gewindekeils 7-a eingeschraubt ist, gegeneinander und damit gegen den Hohlraum verspannt werden.

Die Ringsegmente 31 eines der beiden Halteringe 3, der beispielhaft in Fig. 6 dargestellt ist, weisen an einer Seite Arretierungsmittel 34 zur drehfesten Arretierung je eines Übertragungselements 5,6,7 auf. Diese Arretierungsmittel 34 sind Nuten mit schrägen Nutflanken. Die jeweiligen diesem Haltering 3 zugewandten Enden der Passbolzen 5 (Fig. 8-a) und Zugbolzen 6 (Fig. 8-b) sowie der Gewindekeile 7-a (Fig. 9-a), die jeweils gemeinsam mit einem Lochkeil 7-b (Fig. 9-b) einen Keilbolzen 7 bilden, weisen jeweils mit den Nutflanken 34 korrespondierende keilförmige Kontaktflächen 51,61,71 auf, die im gefügten Zustand der Welle-Nabe-Verbindung in den Nuten 34 der Ringsegmente 31 sitzen und die Übertragungselemente 5,6,7 zentrieren und das Verschrauben ermöglichen.

In Fig. 10 ist eine Gesamtansicht der Welle-Nabe-Verbindung gemäß zweitem Ausführungsbeispiel dargestellt, und Fig. 12 und 13 zeigen unterschiedliche Schnittdarstellungen der Welle-Nabe-Verbindung im gefügten Zustand. Diese unterscheidet sich in folgenden Punkten von dem ersten Ausführungsbeispiel:
Die Welle 1 und die Nabe 2 weisen miteinander zusammenwirkende Axialsicherungsmittel auf, so dass Welle 1 und Nabe 2 sich in der Axialrichtung gegenseitig blockieren.

Diese zusammenwirkenden Axialsicherungsmittel umfassen eine im Innern der Nabe 2 umlaufende Nut 24 und mehrere an der Welle 1 angeordnete, in die Nut 24 eingreifende Noppen 14, die den gleichen Abstand zueinander haben wie die Vertiefungen 12, 22 von Welle 1 und Nabe 2. Zwischen je zwei Vertiefungen 12 der Welle 1 ist mittig eine Noppe 14 angeordnet. Zum Fügen der Welle-Nabe-Verbindung wird die Welle 1 um einen halben Abstand zweier benachbarter Vertiefungen 12 verdreht, so dass vor jeder Vertiefung 22 der Nabe 2 eine Noppe 14 der Welle 1 positioniert ist. Nun kann die Welle 1 relativ zur Nabe 2 axial verschoben werden, wobei die Noppen 14 durch je eine Vertiefung 22 der Nabe 2 hindurch axial bis zur Nut 24 hin verschoben wird. Wie bei einem Bajonettverschluss werden dann die Welle 1 und die Nabe 2 relativ zueinander verdreht bis die Vertiefungen 12, 22 von Welle 1 und Nabe 2 wieder gemeinsam einen Hohlraum für ein Übertragungselement 5,6,7, bilden. Dadurch werden die Noppen 14 in der Nut 24 verschoben, wodurch die Noppen 14 nicht mehr durch eine Vertiefung 22 der Nabe 2 in axialer Richtung verschoben werden können, so dass Welle 1 und Nabe 2 in axialer Richtung relativ zueinander fixiert sind.

Die Übertragungselemente in diesem Ausführungsbeispiel sind Passbolzen 5, die in Fig. 13 gezeigt sind, und die an jeder Stirnseite eine Gewindebohrung zur Aufnahme einer Schraube 8 aufweisen. Wie beim ersten Ausführungsbeispiel sind in gegenüberliegenden axialen Endbereichen der Nabe 2 zwischen Welle 1 und Nabe 2 je ein Ringspalt gebildet, und in jedem Ringspalt ist ein Haltering 3,4 angeordnet. In diesem Ausführungsbeispiel sind die Halteringe jedoch aus Flachmaterial hergestellt und mit den Passbolzen 5 durch Schrauben 8 verbunden. Die Halteringe weisen an den Positionen der Passbolzen 8 Bohrungen auf, durch die die Schrauben 8 angeordnet sind, die mit den Passbolzen 5 verschraubt sind.

### Bezugszeichenliste

- 1: Welle
- 11: Absatz
- 12: Vertiefung
- 13: konische Kontaktfläche
- 14: Noppe
- 2: Nabe
- 21: Absatz
- 22: Vertiefung
- 23: konische Kontaktfläche
- 24: Nut
- 3: Haltering
- 31: Ringsegment
- 32: Bohrung
- 33: konische Kontaktfläche
- 34: Arretierungsmittel, schräge Nutflanken
- 4: Haltering
- 41: Halteringsegment
- 42: Bohrung
- 43: konische Kontaktfläche
- 5: Übertragungselement, Passbolzen
- 51: Arretierungsmittel, keilförmige Kontaktflächen
- 6: Übertragungselement, Zugbolzen
- 61: Arretierungsmittel, keilförmige Kontaktflächen
- 7: Übertragungselement, Keilbolzen
- 7a: Gewindekeil
- 7b: Lochkeil
- 71: Arretierungsmittel, keilförmige Kontaktflächen
- 72: Keilfläche
- 8: Schraube

## Patentansprüche

1. Welle-Nabe-Verbindung, bei der in einem zwischen axialen Endbereichen der Nabe (2) liegenden mittleren Bereich die Nabe (2) einen nach innen weisenden Absatz (21) und die Welle (1) einen nach außen weisenden Absatz (11) aufweist, wobei jeder Absatz (11,21) eine Anordnung von Vertiefungen (12,22) aufweist dergestalt, dass je eine Vertiefung (12) des Absatzes (11) der Welle (1) und eine Vertiefung (22) des Absatzes (21) der Nabe (2) gemeinsam einen in einer Axialrichtung der Welle (1) verlaufenden Hohlraum umschließen, und in den Hohlräumen Übertragungselemente (5,6,7) angeordnet sind, die eine Relativverdrehung zwischen Welle (1) und Nabe (2) blockieren, wobei in gegenüberliegenden axialen Endbereichen der Nabe (2) zwischen Welle (1) und Nabe (2) je ein Ringspalt gebildet ist, in jedem Ringspalt ein Haltering (3,4) angeordnet ist, und die Übertragungselemente (5,6,7) die Halteringe (3,4) gleichmäßig gegeneinander verspannen.

2. Welle-Nabe-Verbindung nach Anspruch 1, bei der die Welle (1) und die Nabe (2) miteinander zusammenwirkende Axialsicherungsmittel aufweisen.

3. Welle-Nabe-Verbindung nach Anspruch 2, bei der die zusammenwirkenden Axialsicherungsmittel mindestens eine Nut (24) und mindestens eine in die Nut (24) eingreifende Noppe (14) umfassen, wobei die mindestens eine Noppe (14) durch eine Vertiefung (12,22) hindurch axial zur Nut (24) hin verschiebbar ist.

4. Welle-Nabe-Verbindung nach Anspruch 3, bei der die Noppe (14) auf dem Absatz (11) der Welle (1) und die Nut (24) im Absatz (21) der Nabe (2) angeordnet sind.

5. Welle-Nabe-Verbindung nach einem der Ansprüche 1 bis 4, bei der mindestens ein Übertragungselement (5,6,7) einen Passbolzen (5) umfasst, dessen Außendurchmesser spielfrei in dem Hohlraum sitzt.

6. Welle-Nabe-Verbindung nach einem der Ansprüche 1 bis 5, bei der mindestens ein Übertragungselement (5,6,7) einen zweiteiligen Keilbolzen (7) umfasst, bei dem die beiden Teile (7-a, 7-b) des Keilbolzens (7) je eine Keilfläche (72) aufweisen.

7. Welle-Nabe-Verbindung nach einem der Ansprüche 1 bis 6, bei der mindestens ein Übertragungselement (5,6,7) mindestens eine Schraube (8) umfasst.

8. Welle-Nabe-Verbindung nach einem der Ansprüche 1 bis 7, bei der die Halteringe (3,4) aus Flachmaterial hergestellt und mit zumindest einem Teil der Übertragungselemente (5,6,7) verbunden sind.

9. Welle-Nabe-Verbindung nach einem der Ansprüche 1 bis 7, bei der jeder Haltering (3,4) mindestens eine konische Kontaktfläche (33,43) aufweist, die mit einer konischen Kontaktfläche (13) der Welle (1) oder mit einer konischen Kontaktfläche (23) der Nabe (2) oder mit konischen Kontaktflächen (13,23) der Welle (1) und der Nabe (2) flächigen Kontakt hat und die Halteringe (3,4) durch zumindest einen Teil der Übertragungselemente (5, 6, 7) gegeneinander, gegen die Welle (1) und gegen die Nabe (2) verspannt sind.

10. Welle-Nabe-Verbindung nach einem der Ansprüche 1 bis 9, bei der die Halteringe (3,4) aus zwei oder mehr Ringsegmenten (31,41) bestehen.

11. Welle-Nabe-Verbindung nach einem der Ansprüche 1 bis 10, bei der mindestens ein Haltering (3) an seiner dem anderen Haltering (4) zugewandten Seite Arretierungsmittel (34) zur drehfesten Arretierung mindestens eines Übertragungselements (5,6,7) aufweist.

12. Welle-Nabe-Verbindung nach Anspruch 11, bei der das Arretierungsmittel (34) eine Nut umfasst und ein dem Haltering (3) zugewandtes Ende des mindestens einen Übertragungselements (5,6,7) so geformt ist, dass es in die Nut einsetzbar ist.

13. Welle-Nabe-Verbindung nach Anspruch 12, bei der die Nut schräge Nutflanken aufweist und das dem Haltering (3) zugewandte Ende des mindestens einen Übertragungselements (5,6,7) keilförmige Kontaktflächen aufweist.

14. Welle-Nabe-Verbindung nach einem der vorhergehenden Ansprüche, bei der die Anordnung der Übertragungselemente (5,6,7) mindestens einen Passbolzen (5), mindestens einen Keilbolzen (7) und mindestens einen Zugbolzen (6), dessen Außendurchmesser mit Spiel in dem Hohlraum sitzt, umfasst.

## Claims

1. Shaft/hub connection, in the case of which, in a middle region which lies between axial end regions of the hub (2), the hub (2) has an inwardly pointing shoulder (21) and the shaft (1) has an outwardly pointing shoulder (11), each shoulder (11, 21) having an arrangement of depressions (12, 22) in such a way that in each case one depression (12) of the shoulder (11) of the shaft (1) and one depression (22) of the shoulder (21) of the hub (2) together enclose a cavity which runs in an axial direction of the shaft (1), and transmission elements (5, 6, 7) which block a relative rotation between the shaft (1) and the hub (2) being arranged in the cavities, in each case one annular gap being formed between the shaft (1) and the hub (2) in opposite axial end regions of the hub (2), a retaining ring (3, 4) being arranged in each annular gap, and the transmission elements (5, 6, 7) bracing the retaining rings (3, 4) homogeneously against one another.

2. Shaft/hub connection according to Claim 1, in the case of which the shaft (1) and the hub (2) have axial securing means which interact with one another.

3. Shaft/hub connection according to Claim 2, in the case of which the interacting axial securing means comprise at least one groove (24) and at least one bump (14) which engages into the groove (24), it being possible for the at least one bump (14) to be displaced through a depression (12, 22) axially towards the groove (24) .

4. Shaft/hub connection according to Claim 3, in the case of which the bump (14) is arranged on the shoulder (11) of the shaft (1), and the groove (24) is arranged in the shoulder (21) of the hub (2).

5. Shaft/hub connection according to one of Claims 1 to 4, in the case of which at least one transmission element (5, 6, 7) comprises a locating bolt (5), the external diameter of which is seated without play in the cavity.

6. Shaft/hub connection according to one of Claims 1 to 5, in the case of which at least one transmission element (5, 6, 7) comprises a two-piece wedge bolt (7), in the case of which the two pieces (7-a, 7-b) of the wedge bolt (7) have in each case one wedge face (72).

7. Shaft/hub connection according to one of Claims 1 to 6, in the case of which at least one transmission element (5, 6, 7) comprises at least one screw (8).

8. Shaft/hub connection according to one of Claims 1 to 7, in the case of which the retaining rings (3, 4) are produced from flat material and are connected to at least one part of the transmission elements (5, 6, 7).

9. Shaft/hub connection according to one of Claims 1 to 7, in the case of which each retaining ring (3, 4) has at least one conical contact face (33, 43) which is in full-area contact with a conical contact face (13) of the shaft (1) or with a conical contact face (23) of the hub (2) or with conical contact faces (13, 23) of the shaft (1) and of the hub (2), and the retaining rings (3, 4) are braced against one another, against the shaft (1) and against the hub (2) by way of at least one part of the transmission elements (5, 6, 7).

10. Shaft/hub connection according to one of Claims 1 to 9, in the case of which the retaining rings (3, 4) consist of two or more ring segments (31, 41).

11. Shaft/hub connection according to one of Claims 1 to 10, in the case of which at least one retaining ring (3) has locking means (34) on its side which faces the other retaining ring (4) for locking at least one transmission element (5, 6, 7) such that it cannot rotate.

12. Shaft/hub connection according to Claim 11, in the case of which the locking means (34) comprises a groove, and an end of the at least one transmission element (5, 6, 7), which end faces the retaining ring (3), is shaped in such a way that it can be inserted into the groove.

13. Shaft/hub connection according to Claim 12, in the case of which the groove has oblique groove flanks, and that end of the at least one transmission element (5, 6, 7) which faces the retaining ring (3) has wedge-shaped contact faces.

14. Shaft/hub connection according to one of the preceding claims, in the case of which the arrangement of the transmission elements (5, 6, 7) comprises at least one locating bolt (5), at least one wedge bolt (7) and at least one tension bolt (6), the external diameter of which is seated with play in the cavity.

## Revendications

1. Assemblage arbre-moyeu, dans lequel, dans une zone centrale qui se trouve entre les zones d'extrémité axiales du moyeu (2), le moyeu (2) possède un talon (21) dirigé vers l'intérieur et l'arbre (1) un talon (11) dirigé vers l'extérieur, chaque talon (11, 21) possédant un arrangement d'empreintes (12, 22) de telle sorte qu'une empreinte (12) du talon (11) de l'arbre (1) et une empreinte (22) du talon (21) du moyeu (2) confinent respectivement ensemble un espace creux qui s'étend dans une direction axiale de l'arbre (1), et des éléments de transmission (5, 6, 7) sont disposés dans les espaces creux, lesquels bloquent une rotation relative entre l'arbre (1) et le moyeu (2), un interstice annulaire étant respectivement formé dans les zones d'extrémité axiales opposées du moyeu (2) entre l'arbre (1) et le moyeu (2), une bague de maintien (3, 4) étant disposée dans chaque interstice annulaire et les éléments de transmission (5, 6, 7) calant les bagues de maintien (3, 4) de manière homogène les unes contre les autres.

2. Assemblage arbre-moyeu selon la revendication 1, dans lequel l'arbre (1) et le moyeu (2) possèdent des moyens d'immobilisation axiale qui coopèrent entre eux.

3. Assemblage arbre-moyeu selon la revendication 2, dans lequel les moyens d'immobilisation axiale coopérants comportent au moins une rainure (24) et au moins un bouton (14) qui vient en prise dans la rainure (24), l'au moins un bouton (14) pouvant coulisser à travers une empreinte (12, 22) dans le sens radial par rapport à la rainure (24) .

4. Assemblage arbre-moyeu selon la revendication 3, dans lequel le bouton (14) est disposé sur le talon (11) de l'arbre (1) et la rainure (24) dans le talon (21) du moyeu (2).

5. Assemblage arbre-moyeu selon l'une des revendications 1 à 4, dans lequel l'au moins un élément de transmission (5, 6, 7) comporte un boulon ajusté (5) dont le diamètre extérieur repose sans jeu dans l'espace creux.

6. Assemblage arbre-moyeu selon l'une des revendications 1 à 5, dans lequel l'au moins un élément de transmission (5, 6, 7) comporte un boulon à clavette (7) en deux parties, dans lequel les deux parties (7-a, 7-b) du boulon à clavette (7) possèdent respectivement une surface de calage (72).

7. Assemblage arbre-moyeu selon l'une des revendications 1 à 6, dans lequel l'au moins un élément de transmission (5, 6, 7) comporte au moins une vis (8).

8. Assemblage arbre-moyeu selon l'une des revendications 1 à 7, dans lequel les bagues de maintien (3, 4) sont fabriquées à partir d'un matériau plat et sont reliées à au moins une partie des éléments de transmission (5, 6, 7).

9. Assemblage arbre-moyeu selon l'une des revendications 1 à 7, dans lequel chaque bague de maintien (3, 4) possède au moins une surface de contact conique (33, 43), qui est en contact plan avec une surface de contact conique (13) de l'arbre (1) ou avec une surface de contact conique (23) du moyeu (2) ou avec des surfaces de contact coniques (13, 23) de l'arbre (1) et du moyeu (2) et les bagues de maintien (3, 4) sont calées les unes contre les autres, contre l'arbre (1) et contre le moyeu (2) par au moins une partie des éléments de transmission (5, 6, 7).

10. Assemblage arbre-moyeu selon l'une des revendications 1 à 9, dans lequel les bagues de maintien (3, 4) se composent de deux segments de bague (31, 41) ou plus.

11. Assemblage arbre-moyeu selon l'une des revendications 1 à 10, dans lequel au moins une bague de maintien (3) possède, sur son côté faisant face à l'autre bague de maintien (4), des moyens de blocage (34) servant à bloquer au moins un élément de transmission (5, 6, 7) en rotation solidaire.

12. Assemblage arbre-moyeu selon la revendication 11, dans lequel les moyens de blocage (34) comportent une rainure et une extrémité de l'au moins un élément de transmission (5, 6, 7) qui fait face à la bague de maintien (3) est façonnée de telle sorte qu'elle peut être introduite dans la rainure.

13. Assemblage arbre-moyeu selon la revendication 12, dans lequel la rainure possède des flancs de rainure obliques et l'extrémité de l'au moins un élément de transmission (5, 6, 7) qui fait face à la bague de maintien (3) possède des surfaces de contact cunéiformes.

14. Assemblage arbre-moyeu selon l'une des revendications précédentes, dans lequel l'arrangement des éléments de transmission (5, 6, 7) comporte au moins un boulon ajusté (5), au moins un boulon à clavette (7) et au moins un boulon de traction (6) dont le diamètre extérieur repose avec un jeu dans l'espace creux.
